(19) Europäisches Patentamt

European Patent Office

Office européen des brevets

(11) Veröffentlichungsnummer: **0 279 296 B1**

(12) **EUROPÄISCHE PATENTSCHRIFT**

(45) Veröffentlichungstag der Patentschrift: **01.07.92**

(21) Anmeldenummer: **88101667.9**

(22) Anmeldetag: **05.02.88**

(51) Int. Cl.⁵: **G01S 17/10**

54 **Synchronisationseinrichtung in einem optoelektronischen Entfernungsmesssystem.**

(30) Priorität: **07.02.87 DE 3703772**

(43) Veröffentlichungstag der Anmeldung:
**24.08.88 Patentblatt 88/34**

(45) Bekanntmachung des Hinweises auf die
Patenterteilung:
**01.07.92 Patentblatt 92/27**

(84) Benannte Vertragsstaaten:
**DE FR GB SE**

(56) Entgegenhaltungen:
**EP-A- 0 066 888**
**DE-A- 2 723 835**
**DE-A- 3 020 996**
**GB-A- 2 120 039**
**US-A- 4 240 746**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Engl, Josef
Altwasserweg 8
W-8069 Rohrbach(DE)**

## Beschreibung

Die Erfindung bezieht sich auf eine Einrichtung zur Synchronisation eines optoelektrischen Entfernungsmeßsystems gemäß dem Gattungsbegriff des Anspruchs 1.

Eine solche Einrichtung ist durch die Anmelderin in der DE-PS 30 20 996 bekannt geworden und zwar zur Bestimmung der Auslöseentfernung von einem sich auf ein Ziel zu bewegenden Flugkörper mittels Laufzeitmessung von Laserimpulsen, wobei der reflektierte Impuls mindestens zwei, unterschiedlichen Entfernungen zugeordneten, Entfernungstoren mit nachgeordneten Integratoren zugeführt wird und durch eine Auswerteinheit die Spannungen an den Integratoren mittels Vergleich dahingehend verglichen werden, welche Integratorspannung zuerst höher ist oder ob die auftretenden Spannungen etwa gleich groß sind.

Auf dieser Einrichtung baut die nachfolgend erläuterte Erfindung auf, wobei ihr die Aufgabe zugrundeliegt, eine Ausregelung aller alterungs- und thermisch bedingter Driften und damit einen Einsatz für stark driftende Technologien bei einer Quarzzeitbasis zu ermöglichen, wie beispielsweise für HCMOS-Systeme bei stark reduziertem Hardware-Aufwand und somit ein Regelsystem geschaffen wird, das einen Referenzlichtimpuls auf eine beliebige Zeitbasis synchronisieren kann.

Diese Aufgabe wird durch die im Anspruch 1 aufgeführten Maßnahmen gelöst, wobei von der Überlegung ausgegangen wurde, daß, wenn es gelingt einen zu einem bekannten Zeitpunkt erzeugten Lichtimpuls auf ein Zeitraster zu synchronisieren, dann auch Reflexionen des gleichen Lichtimpulses an einem entfernten Ziel aufgrund der konstanten Lichtlaufzeit im Medium Luft automatisch ebenfalls auf dieses Zeitraster synchronisiert sind; dies ist bisher nicht erkannt worden. In den Unteransprüchen sind Ausgestaltungen und Weiterbildungen angegeben und in der nachfolgenden Beschreibung sind Ausführungsbeispiele erläutert und in den Figuren der Zeichnung skizziert. Es zeigen:

Fig. 1 ein Blockschaltbild für ein sogenanntes "überlagertes Systems"

Fig. 2 ein Blockschaltbild für ein teilüberlagertes System in schematischer Darstellung,

Fig. 2a ein Blockschaltbild für das System gemäß Fig. 2 mit Schaltbilddarstellung des Referenz- und Nutzsignalkanals,

Fig. 3 ein Blockschaltbild für ein getrenntes System mit Schaltbilddarstellung des Referenz- und Nutzsignalkanals.

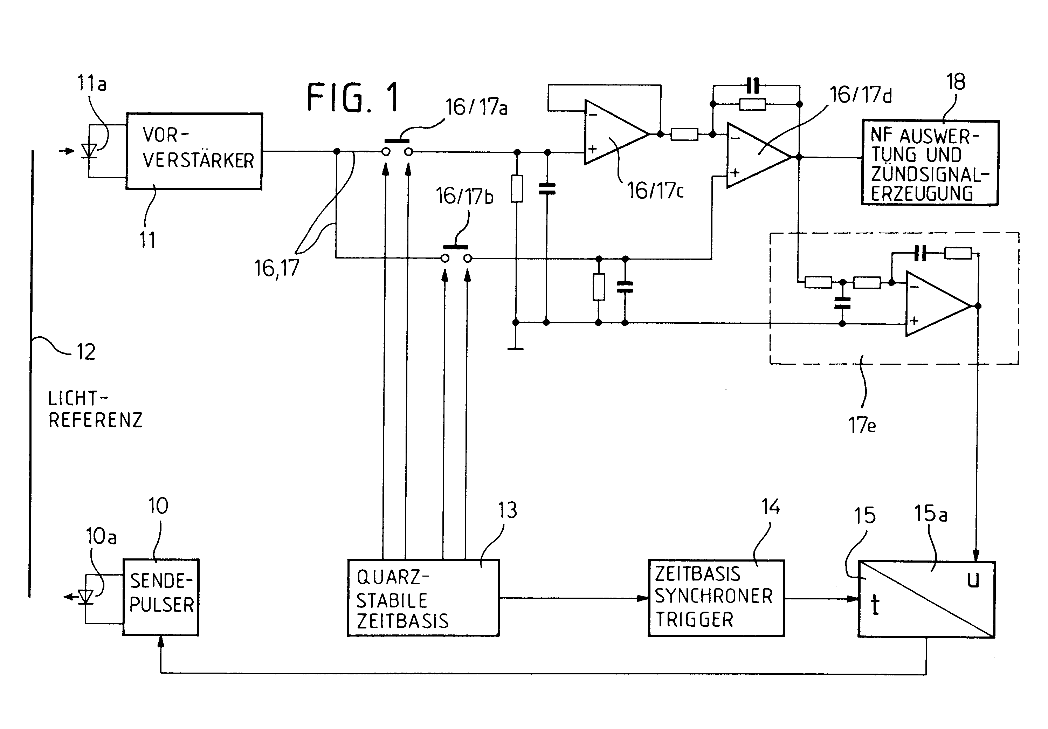

Die Figur 1 zeigt die Anordnung und Verschaltung eines sogenannten überlagerten Systems, bei dem ein quarzstabiles Zeitraster 13 bzw. eine quarzstabile Zeitbasis über den synchronen Trigger 14 und die Einheit 15, 15a einen Sendepulser 10 mit der Laserdiode 10a ansteuert. Wie in der DE-PS 30 20 996 der Anmelderin bereits beschrieben, wird diese Diode über eine - hier nicht gezeichnete - Optik auf das Ziel abgebildet. Von dem ausgesendeten Laserimpuls wird nun ein gewisser Anteil z.B. über einen Lichtleiter als Lichtreferenz 12 direkt in die Empfangsdiode 11a gegeben, die auch das vom Ziel reflektierte Licht aufnimmt und an einen Vorverstärker 11 zur Verstärkung leitet. Die Erfindung sieht nun vor, daß der Referenzlichtimpuls 12 auf ein quarzstabiles Zeitraster 13 synchronisiert, wobei mit dem vorgenannten Zeitraster 13 auch die Reflexion des gleichen Impulses an einem entfernten Ziel bewertet wird. In der Auswerteinheit 18 wird das Nutzsignal 16 als Zündsignal aufbereitet. Falls sich nun das Nutzsignal 16 wesentlich schneller als das überlagerte Regelsignal ändert, können beide Signale durch Doppelmessungen im gleichen Hardwarezweig erfaßt werden. Dies wird dann der Fall sein, wenn zwischen Sensor und Ziel eine Relativgeschwindigkeit von mehr als 50 m/sec gegeben ist. Dieses System von überlagerten Regel- und Signalkanälen erbringt einmal den Vorteil der Minimierung des Bauteil- und Montageaufwandes, da hier nahezu keinerlei zusätzlicher Hardwareaufwand erforderlich ist und zum andernmal den wesentlichen Vorteil, daß Driften und Alterungen des gesamten Systems kompensiert werden. Allerdings ist hier nur eine dynamische Einsatzbarkeit gegeben und Verfälschungen in der Entfernungsmessung durch extrem dichten Nebel sind möglich.

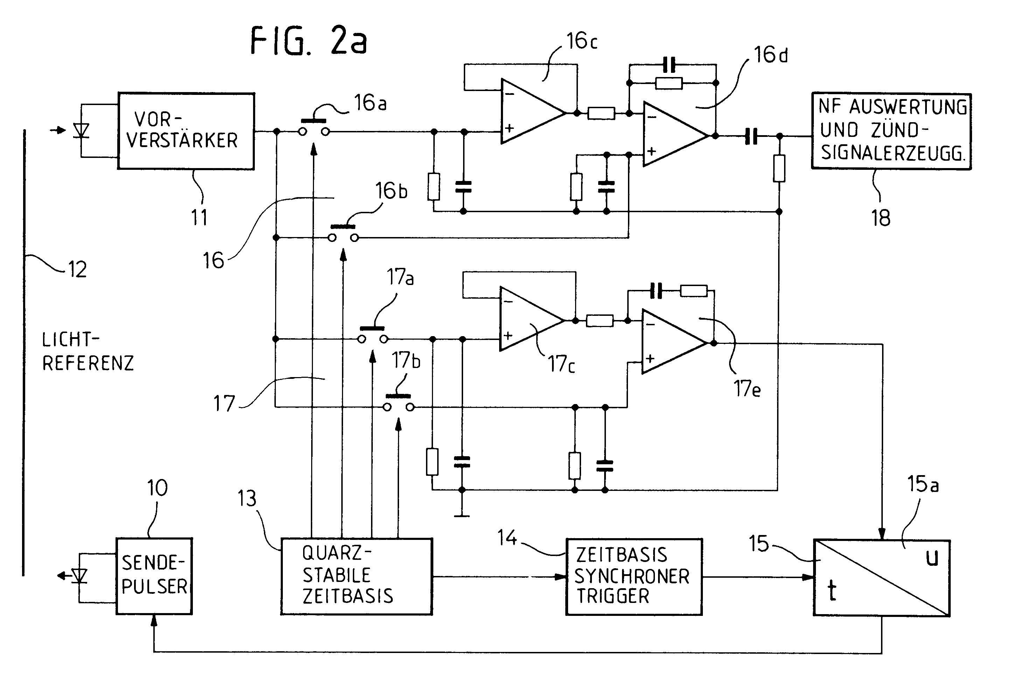

In den Figuren 2 und 2a ist das Ausführungsbeispiel gezeigt, bei dem Regel- und Signalkanal teilüberlagert sind. Anhand der Figuren der Zeichnung und vorstehender Erläuterungen, dürften zum Aufbau und der Funktion dieses Ausführungsbeispiels keine weiteren Erklärungen mehr erforderlich sein. Hier haben die "teilüberlagerten" Kanäle eine gemeinsame Fotodiode 10a und einem gemeinsamen Vorverstärker 11. Der vom erstgenannten Ausführungsbeispiel schon erbrachte Vorteil der Kompensierung von Driften und Alterungen des ganzen Systems wird auch mit diesem System der teilüberlagerten Kanäle voll erfüllt hat aber noch den weiteren Vorteil, daß es statisch einsetzbar und damit gut testbar ist. Bei statischen Einsatz können zwar Offsetprobleme durch Signalüberlagerung auftreten, die jedoch in den Griff zu bekommen sind.

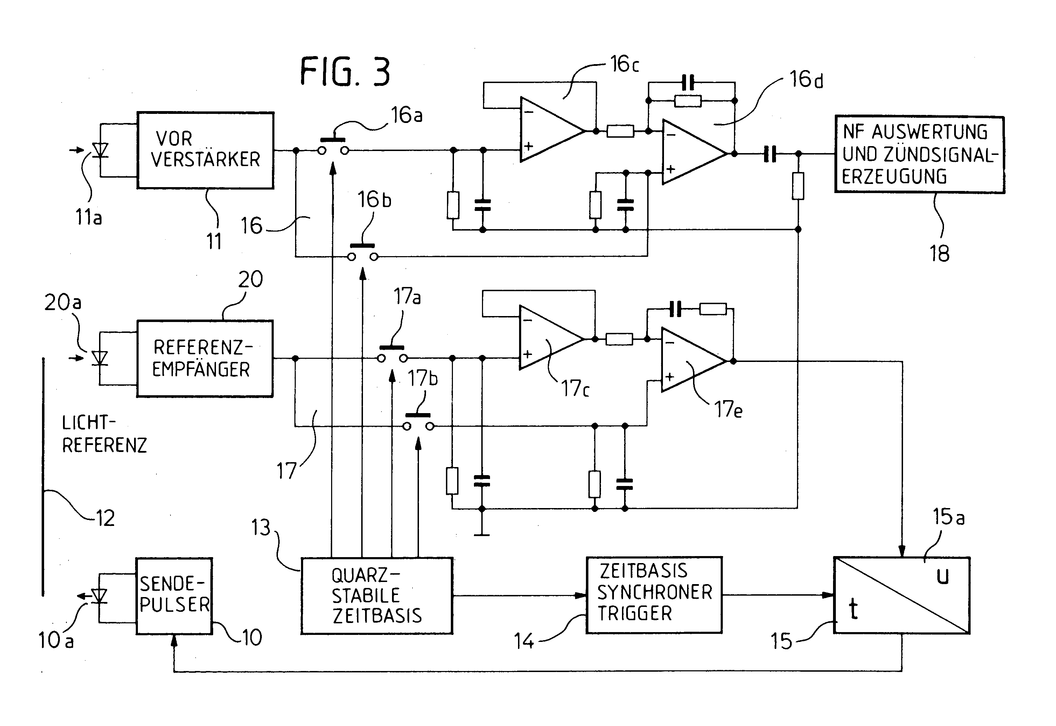

In der Figur 3 ist das Ausführungsbeispiel mit getrennten Regel- und Signalkanälen gezeigt. Hier ist in das System ein Referenzempfänger 20 mit einer Referenzsignal-Empfangsdiode 20a angeordnet, die über den Referenzlichtleiter 12 mit dem Laserpulssender 10 und dessen Sendediode 10a verbunden sind. Das gezeigte Schaltbild bedarf keiner weiteren Erläuterung mehr. Dieses Ausführungsbeispiel hat gegenüber den vorgenannten Ausführungsbeispielen die weiteren Vorteile, daß bei statischem Einsatz die Offsetprobleme unwesentlich sind, eine überlagerte Zeitabtastung möglich ist und die Entfernungsverfälschungen bei extrem dichten Nebel erheblich geringer sind. Allerdings ist hier eine zusätzliche Fotodiode (Referenzsignal-Empfangsdiode 20a) mit einer guten optischen Kopplung zum Sender erforderlich und es ist keine Kompensation des HF-Verstärkers gegeben.

Aus vorstehenden Erläuterungen ist ersichtlich, daß durch die erfindungsgemäßen Maßnahmen ein Entfernungsmeßsystem geschaffen worden ist, das gegen Driften unterschiedlicher Ursachen unempfindlich geworden ist. Ein derart konzipiertes System ist gut als Standoff-Erkennung in solchen Geräten einzusetzen, bei welchen relativ große Anforderungen an die zu erkennende Entfernung gestellt werden, beispielsweise ± 5%. Jegliche Anpassungen an unterschiedliche Standoffs und verschiedene Relativgeschwindigkeiten sind mit nur geringem Hardwareaufwand möglich. Als weiterer Vorteil der vorgeschlagenen Maßnahmen ist anzusehen, daß sie im geforderten Temperaturbereich von -40° C bis +70° C mit handelsüblichen Bauelementen preisgünstig aufzubauen sind.

## Patentansprüche

1. Einrichtung zur Synchronisation eines optoelektronischen Entfernungsmeßsystems zur Bestimmung der Auslöseentfernung von einem sich auf ein Ziel zu bewegenden Flugkörper mittels Laufzeitmessung von reflektierten Laserimpulsen, die mindestens zwei zeitlich aufeinanderfolgenden und damit unterschiedlichen Schaltern als Entfernungstore (16/17a, 16/17b) zugeführt werden, **dadurch gekennzeichnet,** daß mittels eines quarzstabilen Zeitrasters (13) über einen synchronen Trigger (14) und eine Einheit (15, 15a) ein Sendepulser (10,10) angesteuert wird, von dessen Laserimpuls ein Anteil als Referenzlichtimpuls (12) direkt über einander überlagerten Referenz- (17) und Nutzsignalkanälen (16/17) in eine Empfangsdiode (11a) eines Vorverstärkers (11) eingegeben und von dort über die vom Zeitraster (13) angesteuerten Schalter (16/17a, 16/17b) über Impedanzwandler (16/17c) und Impedanzwandler mit Verstärker (16/17d) sowie einen Integrator (17e) auf die Einheit (15,15a) gegeben wird, welche die Ausregelung der Drift durchführt, so daß die nächstkommenden Referenzimpulse auf das Zeitraster (13) synchronisiert werden, und dieses Zeitraster (13) auch die Reflexion des gleichen Laserimpulses an einem entfernten Ziel ermittelt und den Lichtlauf-Zeitunterschied zwischen Nutzsignal und Referenzsignal (12) in einer Einheit (18) auswertet.

2. Einrichtung nach Anspruch 1, **dadurch gekennzeichnet,** daß die beiden Kanäle (16,17) nach dem Vorverstärker (11) voneinander getrennt sind, wobei dem Nutzsignalkanal zwei Schalter (16a,16b), ein Impedanzwandler (16c), ein Impedanzwandler mit Verstärker (16d) und dem Referenzkanal (17) ebenfalls zwei Schalter (17a,17b), Impedanzwandler (17c) und ein Integrator (17e) zugeordnet sind.

3. Einrichtung nach Anspruch 1, **dadurch gekennzeichnet,** daß die beiden Referenz- (17) und Nutzsignalkanäle (16) voneinander getrennt sind und ein Referenzempfänger (20) mit einer Referenz-Empfangsdiode (20a) für den Referenzkanal zusätzlich angeordnet ist, der über den Referenzlichtleiter (12) mit dem Laserpulssender (10) und dessen Sendediode (10a) verbunden ist, und der Nutzsignalkanal (16) Zwei Schalter (16a,16b), einen Impedanzwandler (16c) und einen Impedanzwandler mit Verstärker (16d) aufweist und dem Referenzkanal (17) ebenfalls zwei Schalter (17a,17b), ein Impedanzwandler (17c) und ein Integrator (17e) zugeordnet sind.

## Claims

1. Device for the synchronisation of an optoelectronic rangefinding system for determining the trigger range of a missile approaching a target by way of phase comparison of reflected laser pulses which are applied to at least two successive, and hence differing switches as range stores (16/17a, 16/17b), characterised in that a pulse emitter (10, 10a) is controlled by means of a quartz - stable time slot pattern (13) via a synchronous trigger (14) and a unit (15, 15a), a portion of the laser pulse of the emitter is applied as reference-light pulse (12) directly via stacked reference-(17) and intelligence-signal channels (16/17) to a receive diode (11a) of a pre-amplifier (11), and from there fed, via the switches (16/17a, 16/17b) which are controlled by the time-slot pattern (13), via impedance transformers (16/17c) and impedance transformers with amplifier (16/17d) as well as an integrator (17e), to the unit (15,15a) which carries out the levelling of drift, so that the directly following reference pulses are synchronised on the time-slot pattern (13), and the latter also determines the reflection of the same laser pulse on a distance target and evaluates in a unit (18) the time difference of the beam travel between intelligence signal and reference signal (12).

2. Device according to claim 1, characterised in that the two channels (16. 17) are separated from each other on the output side of the pre-amplifier (11), in which respect the intelligence-signal channel is associated with two switches (16a, 16b), an impedance transformer (16c), an impedance transformer with amplifier (16d) and the reference channel (17) with two switches (17a, 17b), an impedance transformer (17c) and an integrator (17e).

3. Device according to claim 1, characterised in that the two reference- (17) and intelligence-signal channels (16) are separated from each other, and that a reference receiver (20) having a reference-receiving diode (20a) for the reference channel is added, which is connected via the reference-light conductor (12) to the laser-pulse emitter (10) and its emitter diode (10a), and that the intelligence-signal channel (16) has two switches (16a, 16b), an impedance transformer (16c) and an impedance transformer with amplifier (16d), and that the reference channel (17) is also associated with two switches (17a, 17b), an impedance transformer (17c) and an integrator (17e).

**Revendications**

1. Dispositif de synchronisation d'un système de télémétrie opto-électronique pour la détermination de la distance d'activation d'un missile, qui se déplace en direction d'un objectif, par mesure du temps de propagation d'impulsions laser réfléchies qui sont amenées à au moins deux commutateurs placés l'un à la suite de l'autre dans le temps, donc différents, qui agissent comme portes de distance (16/17a, 16/17b), caractérisé en ce qu'une base de temps (13) stabilisée par quartz commande, par l'intermédiaire d'un déclencheur (14) synchrone et d'une unité (15, 15a), un émetteur d'impulsions (10, 10a) dont une partie de l'impulsion laser est transmise directement en tant qu'impulsion lumineuse de référence (12) à une diode réceptrice (11a) d'un préamplificateur (11) par l'intermédiaire de canaux de signal de référence (17) et de signal utile (16/17) superposés et de là est envoyée, par l'intermédiaire des commutateurs (16/17a, 16/17b) pilotés par la base de temps (13), d'adaptateurs d'impédance (16/17c) et d'adaptateurs d'impédance avec amplificateur (16/17d) ainsi que par l'intermédiaire d'un intégrateur (17e), à l'unité (15, 15a) qui procède à la régulation de la dérive, de sorte que les impulsions de référence suivantes sont synchronisées sur la base de temps (13) et ladite base de temps (13) détermine également la réflexion de la même impulsion laser sur une cible éloignée et calcule dans une unité (18) la différence de temps de parcours de la lumière entre le signal utile et le signal de référence (12).

2. Dispositif selon la revendication 1, caractérisé en ce que les deux canaux (16, 17) sont séparés à la sortie du préamplificateur (11), deux commutateurs (16a, 16b), un convertisseur d'impédance (16d) et un convertisseur d'impédance avec amplificateur (16d) étant associés au canal de signal utile et deux commutateurs (17a, 17b), un convertisseur d'impédance (17c) et un intégrateur (17e) étant associés au canal de signal de référence (17).

3. Dispositif selon la revendication 1, caractérisé en ce que les deux canaux de signal de référence (17) et de signal utile (16) sont séparés l'un de l'autre et il est prévu un récepteur de référence (20) supplémentaire avec une diode réceptrice de référence (20a) pour le canal de référence qui est relié à l'émetteur d'impulsions laser (10) et à sa diode émettrice (10a) par l'intermédiaire d'un conducteur optique de référence (12), le canal de signal utile (16) comportant deux commutateurs (16a, 16b), un convertisseurs d'impédance (16c) et un convertisseurs d'impédance avec amplificateur (16d), et deux commutateurs (17a, 17b), un convertisseurs d'impédance (17c) et un intégrateur (17e) étant associés au canal de référence (17).

FIG. 1

VOR-VERSTÄRKER

11a
11

16/17a

16,17

16/17b

16/17c

16/17d

NF AUSWER-TUNG UND ZÜNDSIGNAL-ERZEUGUNG

18

17e

LICHT-REFERENZ

12

SENDE-PULSER

10a
10

QUARZ-STABILE ZEITBASIS

13

ZEITBASIS SYNCHRONER TRIGGER

14

15

15a

t

u

EP 0 279 296 B1

# FIG. 2a

VOR-
VERSTÄRKER

11

LICHT-
REFERENZ

12

16c

16d

16a

16b

16

17

17a

17c

17b

17e

NF AUSWERTUNG
UND ZÜND-
SIGNALERZEUGG.

18

10

SENDE-
PULSER

13

QUARZ-
STABILE
ZEITBASIS

14

ZEITBASIS
SYNCHRONER
TRIGGER

15

15a

u

t

EP 0 279 296 B1

FIG. 3